Europäisches Patentamt

European Patent Office

Office européen des brevets

(11) Veröffentlichungsnummer: **0 047 343**
A1

(12) **EUROPÄISCHE PATENTANMELDUNG**

(21) Anmeldenummer: **80200831.8**

(51) Int. Cl.³: **F 16 C 11/06**

(22) Anmeldetag: **05.09.80**

(43) Veröffentlichungstag der Anmeldung: **17.03.82**
Patentblatt 82/11

(84) Benannte Vertragsstaaten: **DE FR GB IT NL SE**

(71) Anmelder: **A. Ehrenreich GmbH & Co. KG,
Hansaallee 190, D-4000 Düsseldorf 11 (DE)**

(72) Erfinder: **Glatzel, Michael, Weseler-strasse 17,
D-4000 Düsseldorf 1 (DE)**

(54) **Verfahren zur Herstellung eines Halteringes für den Dichtungsbalg eines Kugelgelenkes.**

(57) Bei einem Verfahren zur Herstellung und Montage eines Halteringes (5, 5') aus Kunststoff für die Festlegung des Dichtungsbalges (2) auf seinem Sitz (3) am Kugelgelenkgehäuse (6) durch Radialverspannung soll der Haltering (5, 5') im Durchmesser größer als erforderlich hergestellt und bei der Montage durch Erwärmung auf einen im Betriebszustand kleineren Durchmesser zusammengeschrumpft werden, um die Montage zu erleichtern. Dazu werden beim Spritzgießen des Halteringes (5, 5') durch Steuerung der Abkühlungsgeschwindigkeit eingefrorene Spannungen erzeugt und bei der Montage durch Erwärmung über die Glasübergangstemperatur derartig lebendig gemacht, daß sie den Haltering (5, 5') auf den gewünschten kleineren Durchmesser zusammenziehen.

0047343

- 1 -

## Verfahren zur Herstellung eines Halteringes für den Dichtungsbalg eines Kugelgelenkes.

Die Erfindung betrifft ein Verfahren zur Herstellung eines Halteringes aus Kunststoff für die Festlegung des Dichtungsbalges auf dem entsprechenden Sitz eines Kugelgelenkgehäuses durch Radialverspannung des Halteringes.

Dabei handelt es sich um ein Kugelgelenk für die Lenkung oder die Radaufhängung von Kraftfahrzeugen, das mittels eines elastischen Dichtungsbalges aus Gummi oder Kunststoff geschützt wird, der den Ringspalt zwischen dem Gehäuse und dem Kugelzapfen des Kugelgelenkes verschließt.

Solche Dichtungsbälge sind etwa zwiebelförmig ausgebildet, auf der Seite ihrer größeren Öffnung in einer Ringnut im Gelenkgehäuse gelagert und mittels eines den Balg umgebenden Spannringes in der Nut festgehalten ( Britisches Patent 1 137 963).

Bei einer Ausführung eines solchen Dichtungsbalges wird dieser auf einem zylindrischen Sitz außen auf dem Kugelgelenkgehäuse mit Hilfe eines Halteringes aus Blech mit U-Profil durch Radialverspannung des Ringes auf dem Gehäuse festgelegt, wobei der U-Querschnitt innen entsprechend der Randwulst des Dichtungsbalges geformt ist und die Wulst teilweise übergreifend fixiert (DP 1266 074, Brit. Patent 886 545, US-Pat. 2 559 857 und 2 936 188).

0047343

Dichtungsbälge, die mittels eines elastischen Ringes in einer Ringnut fixiert sind, haben den Nachteil der schwierigen Montage, weil stets die Gefahr besteht, durch das Zusammenschnellen des Ringes den Balg zu beschädigen. Halteringe aus Blech sind ebenfalls nicht immer vorteilhaft. Um die zylinderförmige Berührungsfläche zwischen Ring und Gehäuse abzudichten, bedarf es enger Toleranzen und einer einwandfreien Oberfläche beider Teile. Außerdem hat der Haltering bei der Montage des Dichtungsbalges noch nicht seine endgültige Form: der zweite Schenkel wird erst nach dem Aufsetzen des Balges, durch eine Presse in seine endgültige Stellung umgeformt. Dadurch ist die Gefahr einer Balgbeschädigung außerordentlich groß.

Hier will die Erfindung Abhilfe schaffen. Die Erfindung, wie sie in den Ansprüchen gekennzeichnet ist, löst die Aufgabe, die Balgbefestigung dadurch zu vereinfachen, daß unter Benutzung eines bekannten Balgsitzes am Kugelgelenkgehäuse ein Haltering aus Kunststoff verwendet werden soll, der im Durchmesser größer als erforderlich hergestellt und erst bei der Montage durch äußere Einwirkung auf einen im Betriebszustand kleineren Durchmesser zusammengeschrumpft wird.

Im folgenden wird die Erfindung anhand von zwei Ausführungswege darstellenden Zeichnungen näher erläutert.

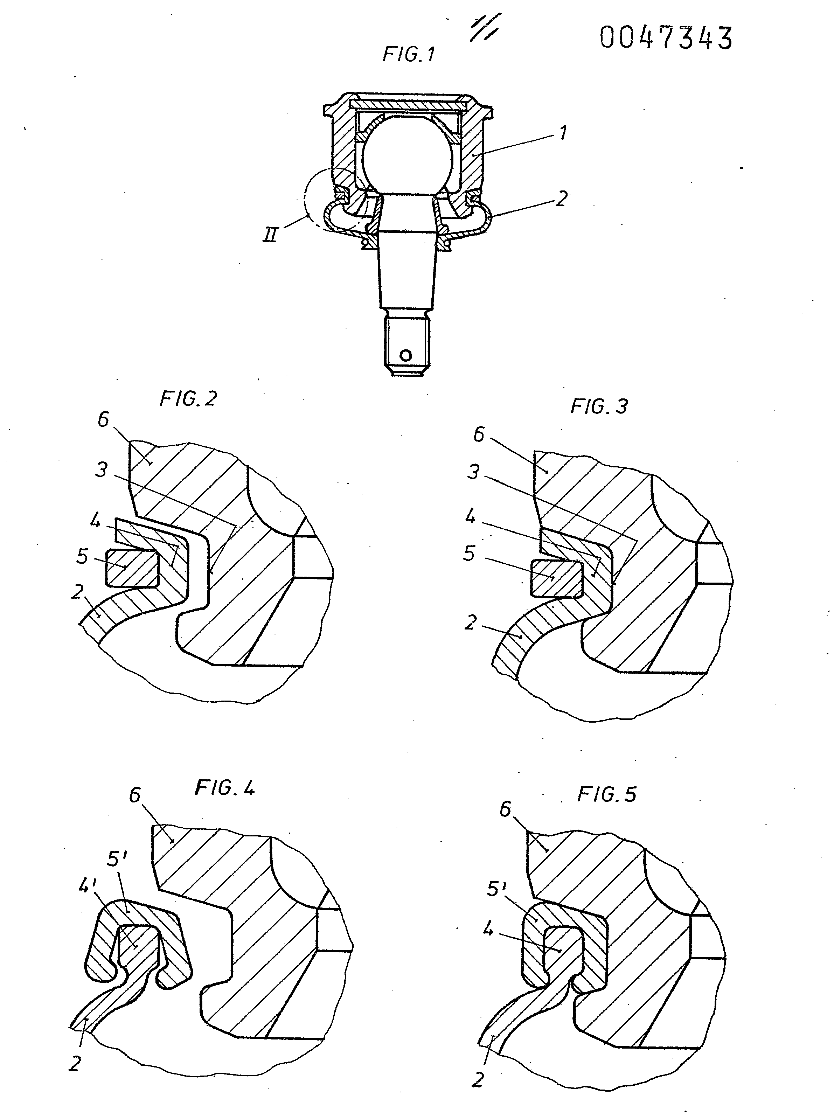

Es zeigt: Fig.1    einen Querschnitt durch ein Kugelgelenk
             mit Dichtungsbalg,

Fig.2    die Einzelheit II gemäß Fig.1 in größerem
             Maßstab mit einem vormontierten Dichtungsbalg und aufgesetztem Haltering,

Fig.3    die Einzelheit gemäß Fig.2 mit auf den
             Betriebszustand geschrumpftem Haltering,

Fig.4  einen anderen Ausführungsweg für einen
       Haltering in der Stellung gemäß Fig.2
       und

Fig.5  den Haltering gemäß Fig.4 im Betriebszustand.

In Fig.1 ist ein Kugelgelenk 1 mit einem Dichtungsbalg 2
in seinem üblichen Aufbau dargestellt. Gemäß der in Fig.2
dargestellten Einzelheit besitzt das Kugelgelenk 1 eine
Umfangsnut 3 für die Aufnahme eines entsprechend ausgebildeten Randes 4 des Dichtungsbalges 2. Die in Fig.2 gezeigte
Stellung entspricht der Montagestellung, in der ein Haltering 5 auf den Rand 4 des Dichtungsbalges 2 und dieser über
die Umfangsnut 3 des Gehäuses 6 des Kugelgelenkes 1 geschoben ist.

Gemäß Fig.3 ist der Haltering 5 auf seine Endstellung im
Betriebszustand geschrumpft. Er zieht damit gleichzeitig
den Rand 4 radial in die Umfangsnut 3 hinein und hält dann
den Dichtungsbalg 2 unverrückbar am Gehäuse 6 fest.

In Fig.4 ist ein U-förmiger Haltering 5' in seiner Vormontagestellung gezeigt.

In Fig.5 ist die Fig.3 analoge Endstellung veranschaulicht.
In diese wird der Haltering 5' durch Erwärmung über die
Glasübergangstemperatur des für ihn verwendeten Kunststoffes zusammengeschrumpft, weil die durch gesteuerte Abkühlungsgeschwindigkeit bei seiner Herstellung eingefrorenen
Spannungen dann wieder lebendig gemacht werden. Sie ziehen
den Haltering 5' von dem größeren Ausgangsdurchmesser gemäß
Fig.2 und Fig.4 auf einen im Betriebszustand kleineren
Durchmesser Fig.3 und Fig.5 zusammen. Damit wird der Rand 4'
des Dichtungsbalges 2 fest durch den in axialer Richtung
offenen Haltering 5' in seiner Stellung gehalten.

Patentansprüche

1.

Verfahren zur Herstellung und Montage eines Halteringes aus Kunststoff für die Festlegung eines Dichtungsbalges auf dem entsprechenden Sitz eines Kugelgelenkgehäuses durch Radialverspannung des Halteringes, dadurch gekennzeichnet, daß beim Spritzgießen des Halteringes (5) durch an sich bekannte Steuerung der Abkühlungsgeschwindigkeit eingefrorene Spannungen erzeugt werden, daß dieser Haltering (5) bei der Montage auf den Dichtungsbalg (2) und dieser auf den Balgsitz (3) des Gehäuses (6) aufgeschoben wird, daß die eingefrorenen Spannungen durch Erwärmung über die Glasübergangstemperatur derart lebendig gemacht werden, daß sie den Haltering (5) von einem die Montage erleichternden größeren Ausgangsdurchmesser, zum endgültigen Festlegen des Dichtungsbalges (2) auf seinem Sitz (3), auf einen im Betriebszustand kleineren Durchmesser zusammenziehen.

2.

Haltering nach dem Verfahren gemäß Anspruch 1, gekennzeichnet durch ein U-Profil, das in Axialrichtung des Gelenkes offen ist.

FIG.1

0047343

FIG.2

FIG.3

FIG.4

FIG.5

Europäisches
Patentamt

**EUROPÄISCHER RECHERCHENBERICHT**

0047343

Nummer der Anmeldung

EP 80 20 0831

| Kategorie | Kennzeichnung des Dokuments mit Angabe, soweit erforderlich, der maßgeblichen Teile | betrifft Anspruch | KLASSIFIKATION DER ANMELDUNG (Int. Cl.) |
|---|---|---|---|
| | **US - A - 3 357 728** (MELTON)<br>* Spalte 3, Zeilen 26-35, 54-56 und 58-60; Figur 2 *<br><br>-- | 1,2 | F 16 C 11/06 |
| | **FR - A - 2 297 342** (RAYCHEM)<br>* ganzes Dokument *<br>& DE - A - 2 600 647<br><br>-- | 1 | |
| | **FR - A - 2 417 028** (D'EMMEREZ)<br>* ganzes Dokument *<br><br>-- | 1 | |
| | **US - A - 3 248 955** (TEMPLETON)<br>* Spalte 3, Zeilen 3-10; Figuren 2-4 *<br><br>-- | 2 | |
| A | **US - A - 3 355 787** (SULLIVAN)<br><br>----- | | |

**EINSCHLÄGIGE DOKUMENTE**

RECHERCHIERTE SACHGEBIETE (Int. Cl.)

F 16 C
F 16 B
F 16 D
F 16. J

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07.05.1981 | ORTHLIEB |

EPA form 1503.1   06.78